# NEUE EUROPÄISCHE PATENTSCHRIFT

(11) **EP 1 095 922 B2**
(45) Veröffentlichungstag und Bekanntmachung des Hinweises auf die Entscheidung über den Einspruch: **08.01.2014**
(45) Hinweis auf die Patenterteilung: 11.12.2002
(21) Anmeldenummer: 99121549.2
(22) Anmeldetag: 29.10.1999
(51) Int. Cl.: C04B 40/00, C04B 22/08, C04B 22/14

(54) **Niederviskoser, stabilisierter Abbinde- und Erhärtungsbeschleuniger**
Low viscosity, stabilised set and hardening accelerators
Accélérateurs de prise et de durcissement stabilisés à faible viscosité

(43) Veröffentlichungstag der Anmeldung: 02.05.2001
(73) Patentinhaber: Sika Schweiz AG, 8064 Zürich (CH)
(72) Erfinder: Bürge, Theodor A., 8954 Geroldswil (CH); Sommer, Marcel, 8408 Winterthur (CH); Wombacher, Franz, 8917 Oberlunkhofen (CH)
(74) Vertreter: Sika Patent Attorneys

(56) Entgegenhaltungen:
- EP-A- 0 076 927
- EP-A- 0 657 398
- EP-A- 0 812 812
- EP-A1- 0 812 812
- EP-B1- 1 114 004
- WO-A-98/18740
- WO-A1-96/05150
- WO-A1-98/18740
- DD-A- 266 344
- DE-A1- 19 625 853
- GB-A- 2 140 794
- US-A- 5 997 630
- CHEMICAL ABSTRACTS, vol. 102, no. 26, 1. Juli 1985 (1985-07-01) Columbus, Ohio, US; abstract no. 225151z, STEPITA: "quick-setting liquid concrete mixture" XP000183679 & CS 217 017 A
- H. REUL: 'Handbuch der Bauchemie', 1991 Seiten 124 - 127,162 UND S. 166-169

## Beschreibung

Die vorliegende Erfindung betrifft einen niederviskosen, stabilisierten Beschleuniger für das Abbinden und Erhärten eines hydraulischen Bindemittels, dessen Verwendung und ein Verfahren zum Abbinden hydraulischer Bindemittel unter Verwendung des Beschleunigers.

Es sind bereits viele Substanzen bekannt, welche das Abbinden und Erhärten von Beton beschleunigen. Die gebräuchlichsten sind u.a. stark alkalisch reagierende Stoffe wie Alkalihydroxide, Alkalikarbonate, Alkalisilikate, Alkalialumiunate und Erdalkalichloride. Bei den stark alkalisch reagierenden Stoffen treten unerwünschte Belästigungen des Verarbeiters auf. So können solche Produkte die Haut sehr stark verätzen und Augenentzündungen oder Hornhautverätzungen verursachen, welche die Sehfähigkeit beeinträchtigen können. Durch Einatmen des beim Verarbeiten entstehenden Staubes oder Aerosols können auch schädliche Auswirkungen auf die Atemwege entstehen.

Betontechnologisch gesehen reduzieren stark alkalische Abbindebeschleuniger die Endfestigkeit und vergrössern das Schwinden, was zu Rissbildung führen kann und deshalb die Dauerhaftigkeit; vor allem die Sulfatbeständigkeit des Betons, stark vermindert.

Neben den oben genannten stark alkalischen Beschleunigern sind auch bereits andere Beschleuniger beschrieben worden.

Beschleuniger für das Abbinden hydraulischer Bindemittel auf Basis von amorphem Aluminiumhydroxid sind bereits bekannt aus EP-A 0 026 262, insbesondere Ansprüche 1 und 11 bis 13, sowie aus Chemical Abstracts Band 86, Nummer 18, Mai 1977, Seite 300, 126087c.

Gemäss EP-A 0 026 262, Seite 2, letzter Absatz liegt die Teilchengrösse des amorphen Aluminiumhydroxids insbesondere im Bereich zwischen 4,8 und 5,4 µm.

Auch ein quellfähiges Celluloseprodukt und weitere Zusatzstoffe können in einem derartigen Erhärtungsbeschleuniger enthalten sein, vgl. EP-A 0 026 262, insbesondere Ansprüche 8 bis 10 und die Beispiele.

Aus DE-A 2 548 687, insbesondere Patentanspruch und Seite 15, ist der Zusatz von Aluminiumsulfat oder Nitraten zu Abbindebeschleunigern auf Basis von Aluminat und Aluminiumoxid bekannt.

Aus der FR-A 2 471 955, insbesondere Ansprüche 1 bis 6, sind die Verwendung von Formiaten und Nitraten in Beschleunigern bekannt.

EP 0 076 927 beschreibt ein Verfahren zur Abbindebeschleunigung durch Zusatz von amorphem Aluminiumhydroxid und wenigstens einem wasserlöslichen Sulfat und/oder Nitrat und/oder Formiat.

EP 181 739 A1 beschreibt die Verwendung von Calciumsulfoaluminat und einer Mischung von Calciumaluminaten, welche zusammen mit Alkalien oder Erdalkalien bei einem Zusatz von 250% Wasser eine aushärtbare Aufschlämmung ergeben.

JP 63 206 341 A2 schützt einen Beschleuniger aus kalziniertem Alunit, Calcium- sulfoaluminat, Natriumaluminat, Natriumcarbonat.

JP 58 190 849 A2 beschreibt eine Mischung aus Calciumsulfoaluminat, Calciumsulfat-Hemihydrat und Calciumhydroxid zur Herstellung rasch abbindender, spritzbarer Beschichtungen.

SU 697 427 erwähnt einen rasch abbinden Zement durch Zusatz von Calciumaluminat, Calciumsulfoaluminat, Calciumoxid, Ferrit, Silikat und Gips.

JP 54 026 817 erwähnt die beschleunigte Aushärtung von Gips durch Zusatz von Calciumsulfoaluminat.

JP 53 099 228 beschreibt einen Beschleuniger für Vergussmörtel basierend auf Calciumsulfoaluminat und Calciumfluoroaluminat und wasserreduzierenden Mitteln.

In DE-OS 2 163 604 sind Beschleuniger auf Basis Calciumfluoraluminat erwähnt.

Aus der JP 01 290 543 A2 sind Mischungen von Calciumsulfoaluminat mit Calciumsulfat und Lithiumcarbonat als Beschleuniger bei tiefen Temperaturen bekannt.

SU 1 350 136 A1 wiederum beschreibt Klinker mit raschem Abbinden durch Zugabe von Bariumsulfat, Calciumaluminat und Calciumsulfoaluminat.

WO 9736839 beschreibt die Verwendung von Lithiumsilikat und/oder Lithiumaluminat und/oder Aluminiumsalzen.

WO 98/18740 beinhaltet ein Verfahren zur Herstellung eines Erstarrungs- und Erhärtungsbeschleunigers für hydraulische Bindemittel. Das gemäss Anspruch 1 zwingend aus 5 Komponenten bestehende Produkt weist eine starke Trübung, eine hohe Viskosität und eine geringe Lagerstabilität auf, dies kann zu Verstopfungen der Spritzdüsen führen. Die hohe Viskosität führt auf der Baustelle beim Dosieren des Produktes, vor allem bei tiefen Temperaturen, zu Problemen. Ein Verdünnen des Produktes ist nicht möglich, da dadurch ein Teil der basischen Salze ausgefällt wird. Der tiefe pH-Wert führt zu Korrosion an den Dosier- und Spritzeinrichtungen.

Ziel der vorliegenden Erfindung war es, eine Zusammensetzung bereitzustellen, die als Abbinde- und Erhärtungsbeschleuniger wirkt, und vorzugsweise alkalifrei und chloridfrei ist, und durch welche ein äusserst rasches Abbinden erreicht werden kann.

Ein Gegenstand der vorliegenden Erfindung ist daher ein niedrigviskoser, stabilisierter, als Beschleuniger für das Abbinden und Erhärten eines Bindemittels oder einer Mischung, die ein Bindemittel enthält, verwendbare Abbinde- und Erhärtungsbeschleuniger, welcher mindestens ein Aluminiumsalz, mindestens einen Komplexbildner für das Aluminium und mindestens einen Korrosionsinhibitor enthält, wobei der Komplexbildner aus Nitrilotriessigsäure, Ethylendiamintetraessigsäure, Gluconsäure, Heptonsäure, Phosphonsäure oder Mischungen derselben besteht.

Ein weiterer Gegenstand ist ein Verfahren, das dadurch gekennzeichnet ist, dass man einem Gemisch, welches das genannte Bindemittel enthält, 0,1 bis 10 Gew.-%, bezogen auf das Gewicht dieses Bindemittels, des erfindungsgemässen Abbinde- und Erhärtungsbeschleunigers zugibt.

Anwendungsmöglichkeiten für den erfindungsgemässe Abbinde- und Erhärtungsbeschleuniger und das erfindungsgemässe Verfahren liegen in der Herstellung vorfabrizierter Elemente und dem Beschleunigen von auf der Baustelle hergestelltem Beton. Im ersten Falle kann die übliche Erhärtungsbeschleunigung durch Wärmen (Elektro- oder Ölheizung oder Dampf) verkürzt oder gar eliminiert werden. Im zweiten Falle können die Ausschalfristen für den Beton verkürzt werden oder es kann auch bei tiefer Temperatur weiter betoniert werden. Anwendungen ergeben sich auch bei der Herstellung rasch abbindener Zement- und Mörtelmischungen, speziell zum Fixieren von Fertigteilen, Gussstücken etc.

Ein besonderes Einsatzgebiet ist der Spritzmörtel und Spritzbeton. Solche Mörtel und Betone dienen zur Herstellung von Bauwerken des Hoch- und Tiefbaues sowie für den Ausbau und die Auskleidung von unterirdischen, natürlich oder künstlich geschaffenen Hohlräumen, wie Stollen-, Tunnel- oder Bergbauten, bei welchen der Beton den statischen Erfordernissen entsprechen, sowie wasserdicht sein muss. Sie dienen ebenfalls zur Konsolidierung von Baugruben, Böschungen, lockeren Felswänden etc.

Die Figur zeigt den Viskositätsverlauf verschiedener Abbindebeschleuniger.

Beispiele für Bindemittel, deren Erhärten und Abbinden durch den erfindungsgemässen Abbinde- und Erhärtungsbeschleuniger den erfindungsgemässen Verfahren beschleunigt werden kann, sind Zement, hydraulischer Kalk alleine oder in Abmischung mit latent hydraulischen oder inerten Füllstoffen und Beispiele für Mischungen, welche diese Bindemittel enthalten, sind Mörtel und Beton.

Weitere Aspekte der vorliegenden Erfindung werden in weiteren unabhängigen Ansprüchen definiert und bevorzugte Ausführungsformen in den abhängigen Ansprüchen.

Speziell bevorzugte erfindungsgemässe Beschleuniger sind dadurch gekennzeichnet, dass sie alkali- und chloridfrei sind. Die Aluminiumsalze werden vorzugsweise ausgewählt aus der Gruppe umfassend Sulfat, Nitrat, Glykolat, Lactat, Acetat, Formiat, Hydroxiformiat, die entsprechenden basischen Salze des Sulfats, Nitrats, Glykolats, Lactats, Acetats, Formiats, Hydroxiformiats, oder Mischungen solcher Salze. Der Beschleuniger weist vorzugsweise einen pH-Wert zwischen 2 und 5 auf, welcher durch einen stöchiometrischen Überschuss an Säure, beispielsweise organische Säure, erzeugt wird. Sind Sulfat und/oder Nitrat vorhanden, so ist ein Mol-Verhältnis zwischen Sulfat und/oder Nitrat zu organischer Säure von 0,1 bis 10 bevorzugt. Komplexbildner sind ausgewählt aus der Gruppe umfassend Nitrilotriessigsäure, Ethylendiamintetraessigsäure, Gluconsäure, Heptonsäure, Phosphonsäure oder Mischungen derselben. Üblicherweise ist ein solcher Komplexbildner in einer Menge von 0,1 bis 5,0 Gew.-% enthalten. Bevorzugte Korrosionsinhibitoren sind ausgewählt aus der Gruppe umfassend
Alkine
Butindiol
Propargylalkohol
3-(Methylamino)propylamin
3-(Dimethylamino)propylamin
3-(Diethylamino)propylamin
Cyclohexylamin
N-Methylcyclohexylamin
N-Ethylcyclohexylamin
1-(Dimethylamino)-2-propanol
1-(Ethylamino)-2-propanol
1-(Cyclohexylamino)-2-propanol
3-Amino-1-propanol
2-Aminoethanol
2,2'-Iminodiethanol
2-(Methylamino)ethanol
2-(Dimethylamino)ethanol
2-(Ethylamino)ethanol
2-(Diethylamino)ethanol
oder Mischungen derselben. Übliche Mengen für solche Korrosionsinhibitoren liegen im Bereich von 0,1 bis 10,0 Gew.-%. Zusätzlich kann der Beschleuniger mindestens ein Verdickungsmittel enthalten, welches vorzugsweise ausgewählt ist aus der Gruppe umfassend Bentonit, Bentone, fermentierte organische Biopolymere, Alginate, Polyglykolether, Acrylatverdicker oder Urethanverdicker, organische Kohlensäureester oder Mischungen derselben. Die erfindungsgemässen Beschleuniger werden vorteilhaft verwendet zum Beschleunigen des Abbindens und Erhärtens von hydraulischen Bindemitteln, hydraulischen Bindemitteln in Abmischung mit latent hydraulischen oder inerten Füllstoffen, insbesondere zur Beschleunigung des Abbindens und Erhärtens von Mörtel oder Beton. Speziell bevorzugt ist die Verwendung des erfindungsgemässen Abbinde- und Erhärtungsbeschleunigers im Spritzmörtel oder Spritzbeton, wobei diese sowohl im Trocken- wie auch im Nassspritzverfahren verarbeitet werden können. Dabei kann der Beschleuniger dem trockenen oder mit Wasser angemachten Bindemittel, Mörtel oder Beton in der Förderleitung, der Vorbenetzungsdüse oder der Spritzdüse mit einem Flüssigdosiergerät direkt in die Mischung oder ins Anmachwasser zugegeben werden.

Bei all diesen Anwendungsarten kann der Abbinde- und Erhärtungsbeschleuniger als Lösung, vorzugsweise mit einem Feststoffgehalt von 20-60 % zum Einsatz kommen. Der Abbinde- und Erhärtungsbeschleuniger mit der erfindungsgemässen Zusammensetzung kann auch in Pulverform vorliegen, wobei es dann bevorzugt ist, dass dieser vor dessen Einsatz, z.B. auf der Baustelle, in Wasser gelöst wird. Es wurde gefunden, dass dieses Lösen in Wasser erst auf der Baustelle keinerlei Nachteile bezüglich der Abbinde- und Erhärtungseigenschaften bringt, dagegen aber grosse Vorteile für den Transport, da kein Wasser mittransportiert werden muss, was sowohl ökologisch als auch ökonomisch äusserst wünschenswert ist.

Durch die Verwendung der erfindungsgemässen Abbinde- und Erhärtungsbeschleuniger wird ein äusserst rasches Abbinden der entsprechenden Bindemittel oder der Mischungen, die derartige Bindemittel enthalten, bewirkt, und es werden hohe Anfangs- und Endfestigkeiten erreicht. Die Abbinde- und Erhärtungsbeschleuniger wirken weder auf den Verarbeiter noch auf die Umwelt ätzend oder toxisch. Zudem werden im Vergleich zu der Verwendung alkalischer Beschleuniger eine wesentliche Verkürzung der Abbindezeit und eine rasche Entwicklung hoher Druckfestigkeiten erreicht. Im Vergleich zu handelsüblichen, alkalifreien Beschleunigern werden feste Ausfällungen von Aluminiumsalzen und dadurch hervorgerufenes Verstopfen der Spritzdüsen vermieden und die Korrosion an den Spritzeinrichtungen eliminiert.

Gleichzeitig können durch bessere Wirksamkeit und geringeren Unterhalt der Geräte sowie weniger Ausfallzeit im Vergleich zu den heute verwendeten alkalifreien Beschleunigern die Kosten auf der Baustelle gesenkt werden. Neben den technischen resultieren also auch enorme wirtschaftliche Vorteile.

Da die erfindungsgemässen Abbindebeschleuniger ohne Alkalien auskommen, werden weder die Festigkeitsentwicklung noch das Schwinden negativ beeinflusst.

Die folgenden Beispiele erläutern die Erfindung.

### Beispiele

### Beschleuniger bestehend aus:

| **Nr.** | **Komponente** | **Massen %** |
|---|---|---|
| **1** | Wasser | 36.4 |
| | Aluminiumdihydroxiformiat | 21 |
| | Aluminiumsulfat. 14 H2O | 42 |
| | EDTA (Stabilisator) | 0.1 |
| | Butin-diol (Korrosionsinhibitor) | 0.5 |
| **2** | Wasser | 35.4 |
| | Aluminiumdihydroxiformiat | 19 |
| | Aluminiumsulfat.14 H2O | 45 |
| | EDTA (Stabilisator) | 0.1 |
| | Butin-diol (Korrosionsinhibitor) | 0.5 |
| **3** | Wasser | 43.4 |
| | Aluminiumdihydroxiformiat | 26 |
| | Aluminiumsulfat. 14 H2O | 30 |
| | EDTA (Stabilisator) | 0.1 |
| | Butin-diol (Korrosionsinhibitor) | 0.5 |
| EDTA = Ethylendiamintetraacetat (Komplexbildner für Aluminiumionen) | | |

wurden in den folgenden Beispielen mit einem herkömmlichen, käuflichen alkalifreien Beschleuniger verglichen.

In den folgenden Beispielen wird der Einfluss der erfindungsgemässen Abbindebeschleuniger auf zementöse Systeme dargestellt. Als Prüfmischungen wurden Mörtel gewählt, die den Beton simulieren sollen. Die Mischungen setzten sich wie folgt zusammen:

| | |
|---|---|
| Portlandzement Typ CEM I 42.5 | 250.00 g |
| Sand 0- 2.2 mm | 750.00 g |
| Wasser | 122.50 g |
| Superverflüssiger auf Melaminbasis | 2.50 g |

Die Abbindeproben wurden mit einem Penetrometer der Firma RMU (Italien) bestimmt. Abbindebeginn und - ende wurden bei einem Eindringwiderstand der 2 mm Nadel von 600 g bzw. 2200 g abgelesen.

Von diesen Mischungen wurden prismatische Prüfkörper der Grösse 4x4x16 cm hergestellt und bei 20° C und 95 % relativer Luftfeuchtigkeit gelagert.

### Beispiel 1

Dieses Beispiel zeigt den Effekt eines erfindungsgemässen Abbindebeschleunigers im Vergleich zu einem herkömmlichen Beschleuniger auf die Abbindezeit.

| **Beschleuniger** | **Eindringwiderstand** | |
|---|---|---|
| | **600g** | **2200g** |
| Erfindungsgemässer Beschleuniger Nr. 1 | 20 min. | 50 min. |
| Erfindungsgemässer Beschleuniger Nr. 2 | 17 min. | 53 min. |
| Erfindungsgemässer Beschleuniger Nr. 3 | 22 min. | 47 min. |
| Herkömmlicher käuflicher Beschleuniger | 30 min. | 65 min. |
| Beschleuniger = 6 % bezogen auf die Zementmasse | | |

### Beispiel 2

In diesem Beispiel ist der Vergleich der Festigkeitsentwicklung anhand der eingangs beschriebenen Prüfkörper dargestellt. Angegeben ist die Druckfestigkeit im MPa nach 1 Tag, 7 Tagen und 28 Tagen (Tag = d).

| **Beschleuniger** | **1d** | **7d** | **28d** |
|---|---|---|---|
| Erfindungsgemässer Beschleuniger Nr. 1 | 18 | 31 | 48 |
| Erfindungsgemässer Beschleuniger Nr. 2 | 19 | 32 | 48 |
| Erfindungsgemässer Beschleuniger Nr. 3 | 16 | 27 | 43 |
| Herkömmlicher käuflicher Beschleuniger | 16 | 30 | 45 |

### Beispiel 3

In diesem Beispiel ist die deutlich verbesserte resp. tiefere Viskosität des erfindungsge-mässen Beschleunigers gegenüber dem herkömmlichen Abbindebeschleuniger deutlich gemacht. Die Viskosität wurde mittels der Auslaufzeit aus einem Fordbecher Ø 4 mm gemessen.

| **Beschleuniger** | **Probenalter** | |
|---|---|---|
| | **neu** | **2 Mt.** |
| Erfindungsgemässer Beschleuniger Nr. 1 | 16 | 18 |
| Erfindungsgemässer Beschleuniger Nr. 2 | 18 | 19 |
| Erfindungsgemässer Beschleuniger Nr. 3 | 16 | 23 |
| Herkömmlicher käuflicher Beschleuniger | 22 | 32 |
| Auslaufzeit = sec. | | |

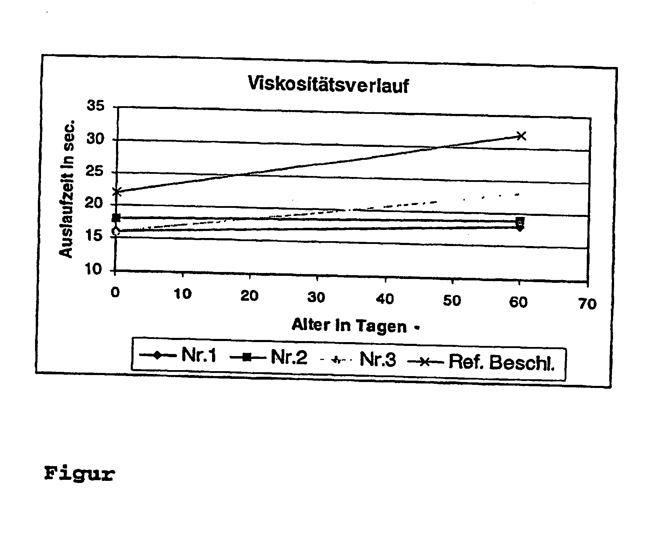

Deutlich zu erkennen, der konstant tiefe Wert der Auslaufzeit der erfindungsgemässen Beschleuniger im Vergleich zu der fast doppelt so langen Zeit des herkömmlichen Beschleunigers. Der Viskositätsverlauf ist in Fig. 1 gezeigt.

### Beispiel 4

Um die Korrosion an metallischen Pumpenteilen, Schlauchkupplungsstücken und Spritzdüsen zu vermindern wurde dem erfindungsgemässen Beschleuniger ein Korrosionsinhibitor zugefügt. Die Zeit bis zum Beginn der Korrosion konnte so von 3 Tagen beim herkömmlichen Beschleuniger auf 9 Tage verlängert werden.

Die Messung erfolgte mit blank geschliffenen Normstahlplättchen (3x3cm) welche vollständig bedeckt in 1:10 mit Wasser verdünntem Abbindebeschleuniger lagerten. Die Plättchen wurden im Abstand von jeweils einem Tag optisch beurteilt.

## Patentansprüche

1. Abbinde- und Erhärtungsbeschleuniger enthaltend mindestens ein Aluminiumsalz **dadurch gekennzeichnet, dass** sie zudem a) mindestens einen Komplexbildner für das Aluminiumion und b) mindestens einen Korrosionsinhibitor enthält, und dass der Komplexbildner aus Nitrilotriessigsäure, Ethylendiamintetraessigsäure, Gluconsäure, Heptonsäure, Phosphonsäure oder Mischungen derselben besteht.

2. Abbinde- und Erhärtungsbeschleuniger nach Anspruch 1, **dadurch gekennzeichnet, dass** er alkali- und chloridfrei ist.

3. Abbinde- und Erhärtungsbeschleuniger nach Anspruch 1, **dadurch gekennzeichnet, dass** das Aluminiumsalz ausgewählt ist aus der Gruppe umfassend Sulfat, Nitrat, Glykolat, Lactat, Acetat, Formiat, Hydroxiformiat, die entsprechenden basischen Salze des Sulfats, Nitrats, Glykolats, Lactats, Acetats, Formiats, Hydroxiformiats, oder Mischungen solcher Salze.

4. Abbinde- und Erhärtungsbeschleuniger nach einem der Ansprüche 1 bis 3, **dadurch gekennzeichnet, dass** er einen stöchiometrischen Überschuss an Säure aufweist, damit der pH-Wert zwischen 2 und 5 liegt.

5. Abbinde- und Erhärtungsbeschleuniger nach einem der Ansprüche 1 bis 4, **dadurch gekennzeichnet, dass** er ein Mol-Verhältnis Sulfat und/oder Nitrat zu organischer Säure von 0,1 bis 10 aufweist.

6. Abbinde- und Erhärtungsbeschleuniger nach einem der Ansprüche 1 bis 5, **dadurch gekennzeichnet, dass** der Komplexbildner in einer Menge von 0,1 bis 5,0 Gew.-% enthalten ist.

7. Abbinde- und Erhärtungsbeschleuniger nach einem der Ansprüche 1 bis 5, **dadurch gekennzeichnet, dass** der Korrosionsinhibitor ausgewählt ist aus der Gruppe umfassend
Alkine
Butindiol
Propargylalkohol
3-(Methylamino)propylamin
3-(Dimethylamino)propylamin
3-(Diethylamino)propylamin
Cyclohexylamin
N-Methylcyclohexylamin
N-Ethylcyclohexylamin
1-(Dimethylamino)-2-propanol
1-(Ethylamino)-2-propanol
1-(Cyclohexylamino)-2-propanol
3-Amino-1-propanol
2-Aminoethanol
2,2'-Iminodiethanol
2-(Methylamino)ethanol
2-(Dimethylamino)ethanol
2-(Ethylamino)ethanol
2-(Diethylamino)ethanol oder Mischungen derselben.

8. Abbinde- und Erhärtungsbeschleunigers nach einem der Ansprüche 1 bis 7, **dadurch gekennzeichnet, dass** der Korrosionsinhibitor in einer Menge von 0,1 bis 10,0 Gew.-% enthalten ist.

9. Abbinde- und Erhärtungsbeschleunigers nach einem der Ansprüche 1 bis 8, **dadurch gekennzeichnet, dass** er mindestens ein Verdickungsmittel enthält.

10. Abbinde- und Erhärtungsbeschleunigers nach Anspruch 9, **dadurch gekennzeichnet, dass** das Verdickungsmittel ausgewählt ist aus der Gruppe umfassend Bentonit, Bentone, fermentierte organische Biopolymere, Alginate, Polyglykolether, Acrylat- oder Urethanverdicker, organische Kohlensäureester oder Mischungen derselben.

11. Abbinde- und Erhärtungsbeschleunigers nach einem der Ansprüche 1 bis 10, **dadurch gekennzeichnet, dass** er als wässrige Lösung mit einer Konzentration von 20-60 % Feststoff vorliegt.

12. Abbinde- und Erhärtungsbeschleunigers nach einem der Ansprüche 1 bis 10, **dadurch gekennzeichnet, dass** sie als Pulver vorliegt.

13. Verfahren zur Anwendung des Abbinde- und Erhärtungsbeschleunigers nach Anspruch 12, **dadurch gekennzeichnet, dass** das Pulver am Verwendungsort durch Mischen mit Wasser in eine Lösung übergeführt wird.

14. Verfahren zur Beschleunigung des Abbindens und Erhärtens von hydraulischen Bindemitteln sowie daraus hergestelltem Mörtel und Beton, **dadurch gekennzeichnet, dass** man einem Gemisch, das hydraulische Bindemittel enthält, eine Abbinde- und Erhärtungsbeschleunigers nach einem der Ansprüche 1 bis 12, in einer Menge von 0,1 bis 10 Gew.-%, bezogen auf das Gewicht des hydraulischen Bindemittels, zugibt.

15. Verwendung des Abbinde- und Erhärtungsbeschleunigers nach einem der Ansprüche 1 bis 12 zur Beschleunigung des Abbindens und Erhärtens von hydraulischen Bindemitteln, hydraulischen Bindemitteln in Abmischung mit latent hydraulischen oder inerten Füllstoffen, insbesondere Mörtel oder Beton.

16. Verwendung des Abbinde- und Erhärtungsbeschleunigers nach einem der Ansprüche 1 bis 12 als Abbinde- und Erhärtungsbeschleuniger im Spritzmörtel oder Spritzbeton nach dem Trocken- oder Nass-spritzverfahren.

17. Verwendung gemäss Anspruch 16, **dadurch gekennzeichnet, dass** der Beschleuniger dem trockenen oder mit Wasser angemachten Bindemittel, Mörtel oder Beton in der Förderleitung, der Vorbenetzungsdüse, der Spritzdüse mit einem Flüssigdosiergerät direkt in die Mischung oder ins Anmachwasser zugegeben wird.

## Claims

1. Setting and hardening accelerator comprising at least one aluminum salt, **characterized in that** it furthermore comprises a) at least one complexing agent for the aluminum ion and b) at least one corrosion inhibitor and **in that** the complexing agent comprises nitrilotriacetic acid, ethylene diamine tetraacetic acid, gluconic acid, heptonic acid, phosphonic acid or mixtures thereof.

2. Setting and hardening accelerator according to claim 1, **characterized in that** it is alkali-free and chloride free.

3. Setting and hardening accelerator according to claim 1, **characterized in that** the aluminum salt is selected from the group comprising sulfate, nitrate, glycolate, lactate, acetate, formiate, hydroxyformiate, the respective basic salts of the sulfate, nitrate, glycolate, lactate, acetate, formiate, hydroxyformiate, or mixtures of such salts.

4. Setting and hardening accelerator according to anyone of the claims 1 to 3, **characterized in that** it comprises a stoichiometric excess of acid such that the pH-value is between 2 and 5.

5. Setting and hardening accelerator according to anyone of the claims 1 to 4, **characterized in that** it comprises a molar ratio of sulfate and/or nitrate to organic acid from 0.1 to 10.

6. Setting and hardening accelerator according to anyone of the claims 1 to 5, **characterized in that** the complexing agent is comprised in an amount of 0.1 to 5.0 % by weight.

7. Setting and hardening accelerator according to anyone of the claims 1 to 5, **characterized in that** the corrosion inhibitor is selected from the group comprising
alkines
butine diol
propargyl alcohol
3-(methylamino)propylamine
3-(dimethylamino)propylamine
3-(diethylamino)propylamine
cyclohexylamine
N-methylcyclohexylamine
N-ethylcyclohexylamine
1-(dimethylamino)-2-propanol
1-(ethylamino)-2-propanol
1-(cyclohexylamino)-2-propanol
3-amino-1-propanol
2-aminoethanol
2,2'-iminodiethanol
2-(methylamino)ethanol
2-(dimethylamino)ethanol
2-(ethylamino)ethanol
2-(diethylamino)ethanol or mixtures thereof.

8. Setting and hardening accelerator according to anyone of the claims 1 to 7, **characterized in that** the corrosion inhibitor is comprised in an amount of 0.1 to 10.0 % by weight.

9. Setting and hardening accelerator according to anyone of the claims 1 to 8, **characterized in that** it comprises at least one thickening agent.

10. Setting and hardening accelerator according to claim 9, **characterized in that** the thickening agent is selected from the group comprising bentonite, bentones, fermented organic biopolymers, alginates, polyglycolethers, acrylate thickeners or urethane thickeners, organic esters of carbonic acid or mixtures thereof.

11. Setting and hardening accelerator according to anyone of the claims 1 to 10, **characterized in that** it is an aqueous solution with a concentration of 20-60 % by weight of solid matter.

12. Setting and hardening accelerator according to anyone of the claims 1 to 10, **characterized in that** it is a powder.

13. A method for the application of the setting and hardening accelerator according to claim 12, **characterized in that** at the place of use the powder is transferred into a solution by mixing with water.

14. A method for the acceleration of the setting and hardening of hydraulic binders as well as therefrom produced mortar and concrete, **characterized in that** to a mixture comprising hydraulic binders, a setting and hardening accelerator according to anyone of the claims 1 to 12 is added in an amount of 0.1 to 10 % by weight referred to the weight of the hydraulic binder.

15. Use of the setting and hardening accelerator according to anyone of claims 1 to 12 for the acceleration of the setting and hardening of hydraulic binders, hydraulic binders in a mixture with latent hydraulic or inert fillers, in particular mortar or concrete.

16. Use of a setting and hardening accelerator according to anyone of claims 1 to 12 as setting and hardening accelerator in spraying mortar or spraying concrete according to the dry or wet spraying method.

17. The use according to claim 16, **characterized in that** the accelerator is added to the dry or water mixed binder, mortar or concrete, in the conveyor pipeline, the pre-wetting nozzle, the spray nozzle by means of a liquid dosing apparatus directly into the mixture or into the mixing water.

## Revendications

1. Accélérateur de prise et de durcissement contenant au moins un sel d'aluminium, **caractérisée en ce qu'**il contient en outre, a) au moins un agent complexant de l'ion aluminium et b) au moins un inhibiteur de corrosion, et que l'agent complexant est de l'acide nitrilotriacétique, de l'acide éthylènediaminetétracétique, de l'acide gluconique, de l'acide heptonique, de l'acide phosphonique ou leurs mélanges.

2. Accélérateur de prise et de durcissement suivant la revendication 1, **caractérisée en ce qu'**il est exempte de métal alcalin et de chlorure.

3. Accélérateur de prise et de durcissement suivant la revendication 1, **caractérisée en ce que** le sel d'aluminium est choisi dans le groupe comprenant le sulfate, le nitrate, le glycolate, le lactate, l'acétate, le formiate, l'hydroxyformiate, les sels basiques correspondants du sulfate, du nitrate, du glycolate, du lactacte, de l'acétate, du formiate, de l'hydroxyformiate ou des mélanges de sels de ce genre.

4. Accélérateur de prise et de durcissement suivant l'une des revendications 1 à 3, **caractérisée en ce qu'**il comprend un excès stoechiométrique d'acide, afin que le pH soit compris entre 2 et 5.

5. Accélérateur de prise et de durcissement suivant l'une des revendications 1 à 4, **caractérisée en ce qu'**il a un rapport en mole du sulfate et/ou du nitrate à l'acide organique de 0,1 à 10.

6. Accélérateur de prise et de durcissement suivant l'une des revendications 1 à 5, **caractérisée en ce que** l'agent complexant est présent en une quantité de 0,1 à 5,0 % en poids.

7. Accélérateur de prise et de durcissement suivant l'une des revendications 1 à 5, **caractérisée en ce que** l'inhibiteur de corrosion est choisi dans le groupe comprenant
des alcynes
le butinediol
l'alcool propargylique
la 3-(méthylamino)propylamine
la 3-(diméthylamino)propylamine
la 3-(diéthylamino)propylamine
la cyclohexylamine
la N-méthylcyclohexylamine
la N-éthylcydohexylamine
le 1-(diméthylamino)-2-propanol
le 1-(éthylamino)-2-propanol
le 1-(cyclohexylamino)-2-propanol
le 3-amino-1-propanol
le 2-aminoéthanol
le 2,2'-iminodiéthanol
le 2-(méthylamino)éthanol
le 2-(diméthylamino)éthanol
le 2-(éthylamino)éthanol
le 2-(diéthylamino)éthanol ou leurs mélanges.

8. Accélérateur de prise et de durcissement suivant l'une des revendications 1 à 7, **caractérisée en ce que** l'inhibiteur de corrosion est présent en une quantité de 0,1 à 10,0 % en poids.

9. Accélérateur de prise et de durcissement suivant l'une des revendications 1 à 8, **caractérisée en ce qu'**il contient au moins un agent épaississant.

10. Accélérateur de prise et de durcissement suivant la revendication 9, **caractérisée en ce que** l'agent épaississant est choisi dans le groupe comprenant la bentonite, la bentone, des biopolymères organiques fermentés, des alginates, des polyglycoléther, des épaississants à base d'acrylate ou d'uréthane, des esters organiques d'acide carbonique ou leurs mélanges.

11. Accélérateur de prise et de durcissement suivant l'une des revendications 1 à 10, **caractérisée en ce qu'**il se présente sous la forme d'une solution aqueuse ayant une concentration de 20 à 60 % de matière solide.

12. Accélérateur de prise et de durcissement suivant suivant l'une des revendications 1 à 10, **caractérisée en ce qu'**il se présente sous la forme d'une poudre.

13. Procédé d'application de l'accélérateur de prise et de durcissement suivant la revendication 12, **caractérisé en ce que** la poudre est transformée sur le lieu d'utilisation en une solution par mélange à de l'eau.

14. Procédé d'accélération de la prise et du durcissement de liants hydrauliques, ainsi que mortiers et bétons qui en sont préparés, **caractérisé en ce que** l'on ajoute à un mélange qui contient le liant hydraulique, un accélérateur de prise et de durcissement suivant l'une des revendications 1 à 12 en une quantité de 0,1 à 10 % en poids rapportés au poids du liant hydraulique.

15. Utilisation de l'accélérateur de prise et de durcissement suivant l'une des revendications 1 à 12, pour l'accélération de la prise et le durcissement de liants hydrauliques, de liants hydrauliques en mélange avec des charges hydrauliques latentes ou des charges inertes, notamment du mortier ou du béton.

16. Utilisation de l'accélérateur de prise et de durcissement suivant l'une des revendications 1 à 12, comme accélérateur de prise et de durcissement dans du mortier projeté ou dans du béton projeté suivant le procédé de projection en voie sèche ou en voie humide.

17. Utilisation suivant la revendication 16, **caractérisée en ce que** l'accélérateur est ajouté au liant, au mortier ou au béton sec ou gâché avec de l'eau dans le conduit d'amenée, la buse de prémouillage, la buse de projection, par un appareil de dosage de liquide, directement dans le mélange ou dans l'eau de gâchage.
